# DEMANDE DE BREVET EUROPEEN

(11) **EP 1 559 942 A1**
(43) Date de publication de la demande: **03.08.2005**
(21) Numéro de dépôt: 05290215.2
(22) Date de dépôt: 01.02.2005
(51) Int. Cl.: F16L 33/24

(54) **Dispositif de raccordement pour tuyaux en matériaux déformables**

(30) Priorité: 02.02.2004 FR 0400948
(71) Demandeur: Riquier Holding S.A., 80570 Dargnies (FR)
(72) Inventeur: Palier, Francois, 80132 Mareuil-Caubert (FR)
(74) Mandataire: Nithardt, Roland

(57) **Abrégé**

La présente invention concerne un dispositif de raccordement qui peut se monter avec un outillage standard, qui soit facile et rapide à mettre en oeuvre, tout en étant fiable en terme d'étanchéité et de durabilité, et au besoin facilement démontable, les parois du tuyau étant préservées de tout risque de cisaillement.

Un des modèles de dispositif de raccordement (11) comporte un raccord (51) femelle fixe destiné à se raccorder à un élément fixe d'une installation ou à un autre tuyau, ce raccord étant solidaire d'un insert (21) destiné à se raccorder à l'extrémité d'un tuyau (1) ainsi qu'une douille (41) destinée à coopérer avec cet insert (21) pour le verrouiller au tuyau (1). Il est caractérisé en ce que l'insert (21) a un profil conique et comporte un filetage (35) formé d'un filet demi-rond à large pas apte à se visser dans l'extrémité du tuyau (1) en le déformant radialement pour le verrouiller par écrasement radial entre l'insert (21) et la douille (41) qui elle comporte une zone de friction (47) apte à être en contact avec le tuyau (1). La douille (41) et le raccord (51) comportent chacun une zone de préhension (45, 55) hexagonale permettant l'utilisation de clés plates traditionnelles.

Application : Tout type d'installation de plomberie.

## Description

La présente invention concerne un dispositif de raccordement pour tuyaux en matériaux déformables utilisés par exemple dans une installation sanitaire et comportant au moins un insert destiné à être introduit dans l'extrémité d'un tuyau, une douille destinée à être enfilée sur ladite extrémité et coopérer avec ledit insert pour le verrouiller audit tuyau et un raccord couplé audit insert et destiné à se raccorder à un élément fixe de ladite installation ou à un autre tuyau.

Dans les installations sanitaires actuelles, comme dans toute installation de plomberie en général, on utilise de plus en plus fréquemment des tuyaux en matériaux synthétiques déformables en remplacement des tuyaux en matériaux métalliques rigides. Ces tuyaux déformables sont généralement réalisés en polyéthylène réticulé haute densité (PER) et présentent de nombreux avantages en terme de facilité et de rapidité de mise en oeuvre puisqu'ils se posent sans soudure. Leur souplesse leur permet de s'adapter à tout type de configurations. Leur installation n'est donc pas limitée aux professionnels de la plomberie mais s'étend aux néophytes. Ils ont également l'avantage d'être incorrodables, peu sensibles au calcaire et conviennent pour véhiculer aussi bien de l'eau chaude que de l'eau froide. On les utilise par conséquent dans des applications très variées et notamment pour les circuits sanitaires, les circuits de chauffage ou de rafraîchissement, etc.

Il existe différents dispositifs de raccordement pour ce type de tuyaux déformables et notamment des dispositifs de raccordement à glissement et d'autres à sertir. Dans tous les cas, l'installateur doit disposer d'un outillage spécial pour monter ces dispositifs de raccordement comme par exemple une pince à emboîture pour élargir l'extrémité du tuyau avant l'introduction de l'embout mâle du raccord qui est généralement rainuré ou pourvu de crans, une pince à glissement pour faire glisser la douille par-dessus l'embout mâle afin de bloquer l'extrémité du tuyau ou un pistolet à sertir pour sertir cette douille. Cet outillage représente un investissement important pour l'installateur, occupe un volume non négligeable dans sa boîte à outil, nécessite des adaptateurs selon le diamètre des tuyaux et complique la mise en oeuvre. De plus, ce type de dispositifs de raccordement est difficilement démontable en cas de besoin.

Des dispositifs de raccordement à visser ont également été développés. Ceux décrits dans les publications DE-B-1167133 et FR-A-990553 sont uniquement destinés à des tuyaux flexibles renforcés par une armature métallique. En effet, les filetages à pas très serré et de forme triangulaire prévus respectivement sur l'insert mâle et la douille sont agencés pour s'accrocher dans l'armature métallique du tuyau préalablement dénudé de manière à le verrouiller. Ces dispositifs ne peuvent donc pas être utilisés pour des tuyaux flexibles en matériau déformable et sans armature métallique, les filets risquant d'entailler le tuyau et de l'endommager de manière irréversible.

Le dispositif de raccordement à visser décrit dans la publication FR-A-985190 est destiné à des tuyaux flexibles en matériau déformable et comporte un insert pourvu d'une forme dite "olive" prolongée par un tronçon d'extrémité fileté à large pas en forme de crans sapin et une douille pourvue d'une cannelure hélicoïdale. La douille doit être préalablement vissée à fond sur le tuyau avant de visser l'insert dans le tuyau. Ce dispositif de raccordement est verrouillé au tuyau par accrochage des filets de l'insert à l'intérieur du tuyau qui agissent comme des harpons, le diamètre extérieur du tuyau étant contenu par la douille. La tenue à l'arrachement et l'étanchéité d'un tel dispositif de raccordement ne sont pas garanties en cas de forte pression. De plus, les filets en forme de crans sapin forment des arêtes vives qui pénètrent dans l'épaisseur du tuyau, voire coupent l'intérieur du tuyau, l'endommageant de manière irréversible et provoquant des amorces de rupture.

La présente invention vise à pallier ces inconvénients en proposant un dispositif de raccordement qui ne demande aucun outillage spécifique, mais permet l'utilisation d'un outillage standard tel que contenu dans une boîte à outil, qui soit facile et rapide à mettre en oeuvre, tout en étant fiable en terme d'étanchéité et de durabilité, et qui soit également démontable aisément en cas de besoin, les parois du tuyau étant préservées de tout risque de cisaillement.

Dans ce but, l'invention concerne un dispositif de raccordement du genre indiqué en préambule, caractérisé en ce que l'une des pièces, dudit insert ou de ladite douille, comporte au moins un filetage formé d'un filet demi-rond à large pas apte à se visser dans ou sur l'extrémité du tuyau à raccorder, l'autre pièce, de ladite douille ou dudit insert, comporte au moins une zone de friction apte à être en contact avec ledit tuyau, au moins ledit insert ou ladite douille comporte une section variable apte à déformer radialement l'extrémité dudit tuyau pour autoriser son verrouillage par écrasement radial entre ledit insert et ladite douille, et, en ce qu'au moins l'insert, la douille et/ou le raccord comportent une zone de préhension pourvue de formes aptes à coopérer avec un outil de serrage traditionnel.

Ces zones de préhension prévues sur l'insert, la douille et/ou le raccord peuvent comporter des méplats permettant l'utilisation de clés plates par exemple.

Dans une forme de réalisation préférée de l'invention, la section variable est constituée d'au moins un tronçon conique prévu au moins sur l'insert ou la douille.

De préférence, le filetage a un pas compris entre 1 et 4 mm.

Dans le cas où l'insert comporte le filetage, la douille comporte avantageusement ladite zone de friction sur au moins une partie de son alésage intérieur destiné à être en contact avec le tuyau, cette zone de friction pouvant être formée par un état de surface rugueux, un crantage ou un moletage. Dans le cas où la douille comporte le filetage, l'insert comporte ladite zone de friction, qui peut être rainurée ou filetée, sur au moins une partie de sa zone de raccordement destinée à être en contact avec le tuyau.

Dans une première variante de réalisation, l'insert et le raccord peuvent être constitués d'une seule pièce.

Dans une seconde variante de réalisation, l'insert et le raccord peuvent être constitués de deux pièces assemblées pour être mobiles en rotation l'une par rapport à l'autre autour de leur axe.

Dans ce cas, l'insert comporte, en prolongement de sa zone de raccordement avec le tuyau, une zone de préhension et une tête de liaison, la zone de préhension étant pourvue de formes aptes à coopérer avec un outil de serrage traditionnel et la tête de liaison comportant des formes d'assemblage complémentaires à celles prévues dans le raccord, un organe d'étanchéité étant disposé entre l'insert et le raccord.

L'insert peut comporter avant son tronçon conique au moins un tronçon d'extrémité cylindrique d'un diamètre sensiblement égal au diamètre intérieur du tuyau et correspondant au plus petit diamètre du tronçon conique. Il peut également comporter après son tronçon conique au moins un tronçon cylindrique d'un diamètre correspondant au plus grand diamètre du tronçon conique. Cet insert peut enfin comporter après son tronçon cylindrique un dégagement apte à recevoir le bord du tuyau rétracté.

Le dispositif de raccordement peut également comporter au moins un et de préférence deux organes d'étanchéité prévus sur le tronçon d'extrémité dudit insert en vue d'améliorer encore l'étanchéité du raccordement.

La présente invention et ses avantages apparaîtront mieux dans la description suivante d'un mode de réalisation donné à titre d'exemple non limitatif, en référence aux dessins annexés, dans lesquels :
- les figures 1 à 4 sont des vues axiales partiellement en coupe de quatre dispositifs de raccordement selon l'invention et les figures 2' à 4' sont des variantes de réalisation des dispositifs de raccordement des figures 2 à 4,
- la figure 5 est une vue de détail du raccord femelle fixe du dispositif de la figure 1,
- la figure 6 est une vue de détail du raccord femelle tournant du dispositif de la figure 2,
- la figure 7 est une vue de détail du raccord mâle tournant du dispositif de la figure 4,
- la figure 8 est une vue de détail de la douille des dispositifs des figures 1 à 4, et
- la figure 9 est une vue de détail du raccord à sertir du dispositif de la figure 4.

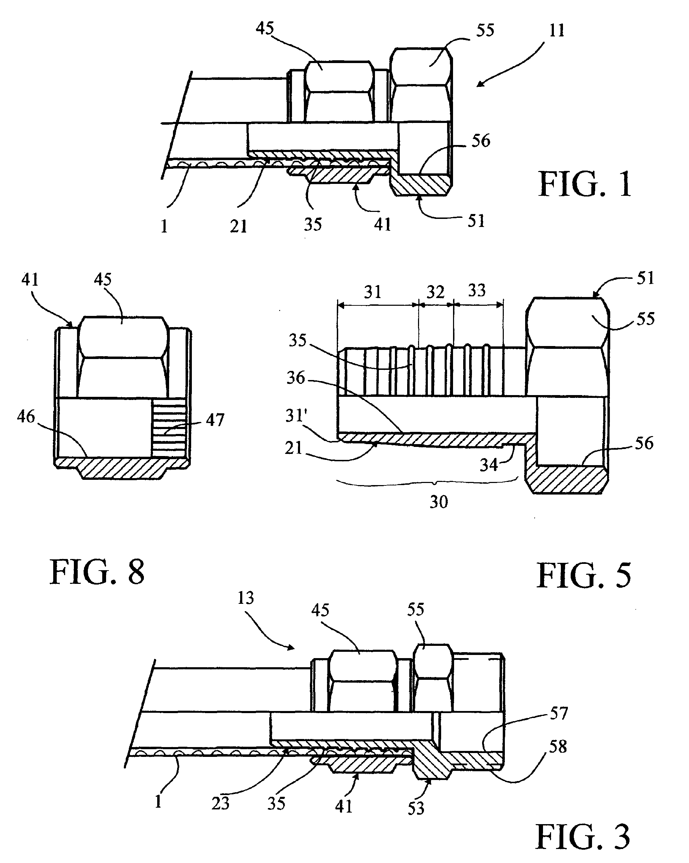

En référence aux figures 1 à 4, le dispositif de raccordement 11-14 selon l'invention est destiné à raccorder des tuyaux 1 en matériaux déformables, par exemple en polyéthylène réticulé haute densité (PER), pouvant être utilisés dans des installations sanitaires, de chauffage, de climatisation, ou dans toute autre installation de plomberie.

Les figures 1 à 4 illustrent quatre modèles du dispositif de raccordement 11-14 de l'invention qui comportent chacun un insert 21-24 creux destiné à se raccorder à l'extrémité d'un tuyau 1, une douille 41 destinée à coopérer avec cet insert 21-24 pour le verrouiller audit tuyau 1 et un raccord 51-54 creux mâle ou femelle couplé à cet insert 21-24 et destiné à se raccorder à un élément fixe d'une installation, tel qu'un robinet, ou à un autre tuyau. Dans les figures 1 et 3, l'insert 21, 23 et le raccord 51, 53 sont formés d'une seule et même pièce, le raccord 51, 53 étant qualifié de raccord fixe. Dans les figures 2 et 4, l'insert 22, 24 et le raccord 52, 54 sont formés de deux pièces distinctes et assemblées moyennant un degré de liberté en rotation autour de leur axe A, le raccord 52, 54 étant qualifié de raccord tournant.

Dans tous les modèles représentés, l'ensemble formé par l'insert 21-24 et la douille 41 permet de raccorder l'extrémité du tuyau 1 par vissage et écrasement radial de la paroi du tuyau 1 entre ces deux pièces pour le verrouiller. Dans ce but, l'insert 21-24 comporte au moins un tronçon conique 32 pourvu d'un filetage 35 et la douille 41 comporte un alésage cylindrique 46 agencé pour empêcher la rotation du tuyau 1 pendant le vissage de l'insert 21-24. Bien entendu, d'autres configurations non représentées peuvent également convenir, dans lesquelles le filetage est prévu dans l'alésage de la douille, cette douille étant cylindrique et l'insert conique ou cette douille étant conique et l'insert cylindrique, l'essentiel étant de générer un écrasement radial de la paroi du tuyau pour le verrouiller, lors du montage de l'insert et de la douille par vissage. Dans le cas d'un filetage prévu dans la douille, l'insert comporte alors au moins une zone de friction, rainurée, filetée ou autre, sur au moins une partie de sa zone de raccordement destinée à être en contact avec le tuyau, cette zone de friction permettant d'éviter l'extraction de l'insert sous l'effet de la pression de fluide. Dans tous les cas, cette zone de friction est conçue pour adhérer au tuyau sans l'endommager.

Le filetage 35 prévu sur l'insert 21-24 et/ou dans la douille est de préférence formé d'un filet demi rond ou similaire pour ne pas entailler la paroi intérieure et/ou extérieure du tuyau 1 et risquer de créer des amorces de rupture. Ce filetage 35 a également un pas suffisamment grand pour faciliter son vissage par déformation de la paroi intérieure ou extérieure du tuyau 1. Ce pas peut être compris entre 1 et 4 mm et par exemple égal à 2,5 mm.

Un premier modèle de dispositif de raccordement 11 est décrit un référence à la figure 1. Dans cet exemple, l'insert 21 et le raccord 51 femelle fixe sont formés d'une seule et même pièce traversée par un alésage 36 pour le passage d'un fluide. En référence plus particulièrement à la figure 5, l'insert 21 comporte extérieurement une zone de raccordement 30 qui s'étend sur toute sa longueur jusqu'à la partie "raccord femelle" 51 et comprend de gauche à droite :
■ un tronçon d'extrémité cylindrique 31 d'un diamètre sensiblement égal au diamètre intérieur du tuyau 1 et précédé par un chanfrein 31' destiné à faciliter l'introduction de l'insert 21 dans le tuyau 1,
■ un tronçon conique 32 s'évasant d'un plus petit diamètre correspondant au diamètre du tronçon d'extrémité cylindrique 31 vers un plus grand diamètre destiné à élargir l'extrémité du tuyau 1 par exemple d'environ 10 %, ce tronçon conique 32 comportant une partie du filetage 35,
■ un tronçon cylindrique 33 d'un diamètre correspondant au plus grand diamètre du tronçon conique 32 destiné à écraser radialement le tuyau 1 contre la douille 41, ce tronçon cylindrique 33 comportant l'autre partie du filetage 35,
■ un dégagement 34 périphérique d'un diamètre très légèrement inférieur au plus grand diamètre du tronçon conique 32 correspondant au dégagement du filetage 35 dans lequel le tuyau 1 peut se rétracter.

La conception de cette zone de raccordement 30 peut varier, l'essentiel étant de conserver la combinaison "cône et filetage". La succession des tronçons de la zone de raccordement 30 telle qu'illustrée a l'avantage de sécuriser le vissage de l'insert 21 dans le tuyau 1 en respectant l'axe de ce tuyau 1, pour assurer une bonne étanchéité et un verrouillage mécanique du montage.

Le raccord 51 comporte une bague pourvue extérieurement d'une zone de préhension 55 hexagonale de type six pans et intérieurement d'un alésage fileté 56 d'un diamètre correspondant à celui d'un élément de l'installation, tel que par exemple un robinet dont le diamètre est généralement normalisé, ou d'un autre raccord. Les six pans de sa zone de préhension 55 autorisent l'utilisation d'un outil de serrage standard comme par exemple une clé plate.

La douille 41 associée à ce raccord 51 est illustrée en détail à la figure 8. Elle est constituée d'une bague pourvue extérieurement d'une zone de préhension 45 hexagonale de type six pans et intérieurement d'un alésage cylindrique 46 lisse et d'une zone de friction 47 s'étendant sur une partie de cet alésage 46 pour empêcher la rotation du tuyau 1 pendant le vissage de l'insert 21. Dans l'exemple représenté, la zone de friction 47 est localisée dans une extrémité de la douille 41 et s'étend sur environ ¼ de sa longueur. Elle est formée par un crantage, un moletage ou autre, pour créer des reliefs favorisant l'accrochage par adhérence de la douille 41 sur le tuyau 1 sans l'endommager. Les six pans de sa zone de préhension 45 permettent d'utiliser un outil de serrage standard comme par exemple une clé plate.

La mise en place de ce dispositif de raccordement 11 tel qu'illustré à la figure 1 comporte les étapes suivantes :
1. introduction de la douille 41 sur l'extrémité du tuyau 1, leurs bords respectifs étant affleurants,
2. introduction et vissage de l'insert 21 et du raccord 51 dans le tuyau 1 d'abord à la main puis à l'aide de deux outils de serrage standard comme des clés plates en prise directe avec les zones de préhension 45, 55 de la douille 41 et du raccord 51 jusqu'à amener ce raccord 51 en butée contre la douille 41,
3. vissage du raccord 51 femelle fixe sur un élément mâle de l'installation à l'aide d'un outil de serrage traditionnel comme une clé plate jusqu'en butée contre le fond de ce raccord 51, en faisant tourner l'ensemble "tuyau 1 et dispositif de raccordement 11" ou l'élément mâle de l'installation.

Pendant l'opération de vissage, l'insert 21 génère l'écartement du tuyau 1 qui s'écrase contre la douille 41 au fur et à mesure de son avancée à l'intérieur du tuyau 1 entraînant le serrage radial et l'étanchéité du raccordement. A la fin du vissage, le bord du tuyau 1 peut se rétracter dans le dégagement 34 de l'insert 21.

Le dispositif de raccordement 13 de la figure 3 est sensiblement similaire à celui de la figure 1 à la différence près que l'insert 23 est couplé avec un raccord 63 mâle fixe avec lequel il définit une seule et même pièce. Dans cet exemple, l'insert 23 et la douille 41 sont identiques aux précédents et portent les mêmes références. Le raccord 53 est formé d'une bague allongée pourvue intérieurement d'un alésage lisse 57 définissant un passage de fluide et extérieurement d'une zone de préhension 55 hexagonale de type six pans prolongée par un tronçon cylindrique fileté 58 d'un diamètre correspondant à celui d'un élément de l'installation. Les six pans de sa zone de préhension 55 autorisent l'utilisation d'un outil de serrage standard comme par exemple une clé plate. La mise en place de ce dispositif de raccordement 13 tel qu'illustré à la figure 3 est sensiblement identique à celle du modèle de la figure 1 et ne sera pas détaillé.

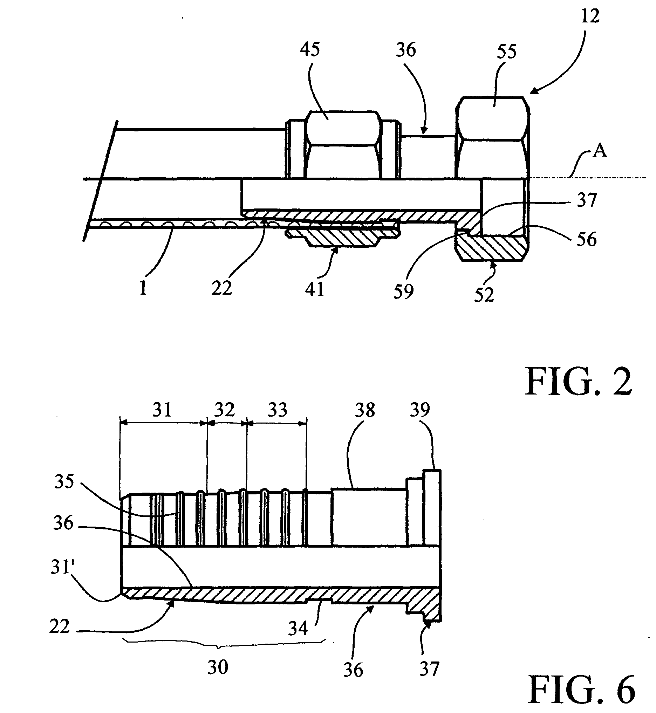

Le dispositif de raccordement 12 de la figure 2 comporte un insert 22 et un raccord 52 femelle tournant, formés de deux pièces distinctes et assemblées moyennant un degré de liberté en rotation autour de leur axe A. Ce modèle facilite le montage du tuyau 1 muni de son dispositif de raccordement 12 sur un élément de l'installation puisque le raccord 52 peut être tourné librement autour de l'insert 22 et du tuyau 1 qui restent fixes. L'insert 22 correspondant est représenté plus en détail à la figure 6. Il comprend une zone de raccordement 30 sensiblement identique à celle de l'insert 21 de la figure 5 utilisé dans les figures 1 et 3, et portant les mêmes références. Cet insert 22 est prolongé par une zone de préhension 36 et une tête de liaison 37. La zone de préhension 36 de l'insert 22 reste accessible après l'assemblage du dispositif de raccordement 12 au tuyau 1 puisqu'elle est située entre le tuyau 1 et le raccord 52.

Elle comporte au moins deux méplats 38 disposés en opposition et permettant son vissage dans le tuyau 1 à l'aide d'un outil de serrage traditionnel comme une clé plate. La tête de liaison 37 de l'insert 22 comporte des formes d'assemblage complémentaires à celles prévues dans le raccord 52. Dans l'exemple représenté, la tête de liaison 37 est constituée d'un tronçon cylindrique terminé par un épaulement 39 venant en appui contre un épaulement intérieur 59 prévu dans le prolongement de l'alésage intérieur 56 du raccord 52. L'assemblage de ces deux pièces s'effectue simplement en enfilant le raccord 52 sur l'insert 22, du côté de la zone de raccordement 30, jusqu'à amener les épaulements 59, 39 correspondants en butée. Ainsi, le raccord 52 reste mobile en rotation autour de son axe A par rapport à l'insert 22 fixe.

La mise en place de ce dispositif de raccordement 12 tel qu'illustré à la figure 2 comporte les étapes suivantes :
1. introduction de la douille 41 sur l'extrémité du tuyau 1, leurs bords respectifs étant affleurants,
2. assemblage du raccord 52 et de l'insert 22,
3. introduction et vissage de l'insert 22 dans le tuyau 1 d'abord à la main puis à l'aide de deux outils de serrage standard comme des clés plates respectivement en prise directe avec les zones de préhension 45, 36 de la douille 41 et de l'insert 22 jusqu'à introduction complète de la zone de raccordement 30 dans le tuyau 1,
4. vissage du raccord 52 tournant sur un élément de l'installation à l'aide d'un outil de serrage traditionnel comme une clé plate, jusqu'en butée contre la tête de liaison 37 de l'insert 22.

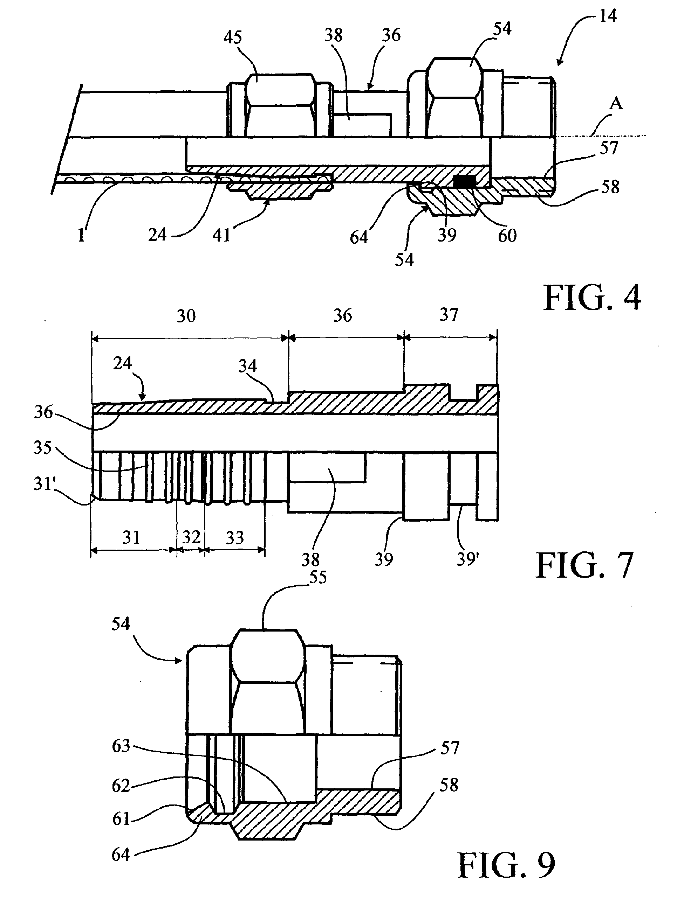

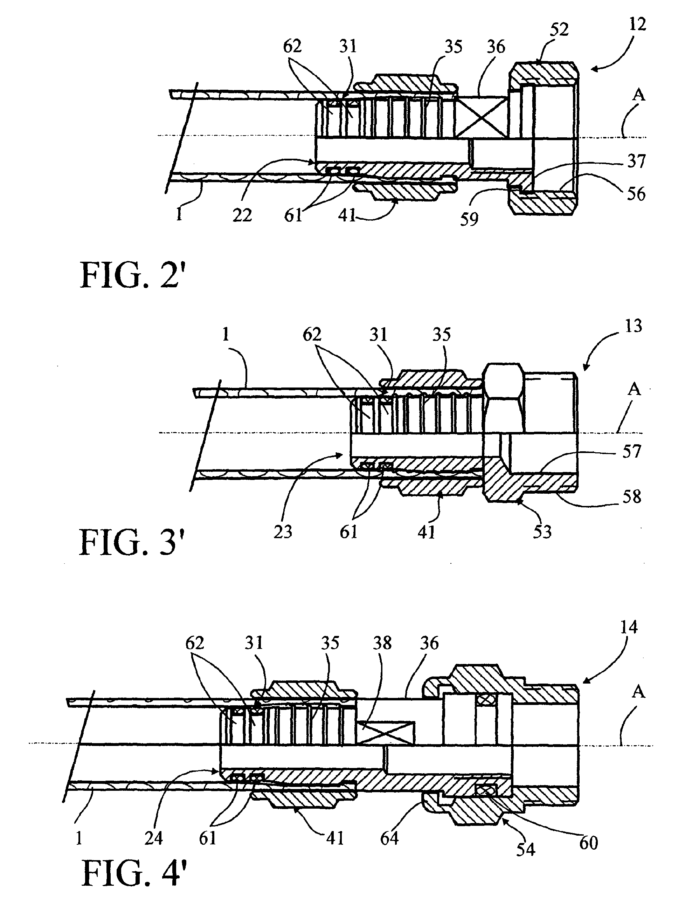

Le dispositif de raccordement 14 de la figure 4 est le pendant du modèle de la figure 2 et comprend un raccord 64 mâle tournant. Comme précédemment, l'insert 24 et le raccord 54 sont formés de deux pièces distinctes et assemblées moyennant un degré de liberté en rotation autour de leur axe A. L'insert 24 correspondant est représenté plus en détail à la figure 7 et reprend la même conception que celui de la figure 6 utilisé dans la figure 2 avec les mêmes références. On retrouve sa zone de préhension 36 avec deux méplats 38 disposés en opposition et sa tête de liaison 37 avec son épaulement extérieur 39. Dans cet exemple, l'épaulement extérieur 39 est plus large que le précédent et comporte une gorge 39' destinée à recevoir au moins un joint torique 60 ou tout autre organe d'étanchéité, assurant l'étanchéité entre le raccord 54 tournant et l'insert 24 fixe. Ce raccord 54, représenté plus en détail à la figure 9, est constitué d'une bague allongée pourvue intérieurement, de gauche à droite, d'un chanfrein d'introduction 61, d'une rainure d'affaiblissement 62, d'un premier alésage 63 d'un diamètre correspondant à celui de l'épaulement extérieur 39 de la tête de liaison 37 et d'un second alésage 57 de plus petit diamètre définissant un passage de fluide. Elle comporte extérieurement, de gauche à droite, une zone de sertissage 64, une zone de préhension 55 hexagonale de type six pans et un tronçon cylindrique fileté 58 d'un diamètre correspondant à celui d'un élément de l'installation. La zone de sertissage 64 autorise le montage du raccord 54 sur l'insert 24 puis leur assemblage indémontable par sertissage en atelier en écrasant la zone de sertissage 64 derrière l'épaulement extérieur 39. La tête de l'insert 37 est ainsi bloquée en translation dans le raccord 54 qui reste mobile en rotation autour de son axe A. La mise en place de ce dispositif de raccordement 14 tel qu'illustré à la figure 4 est sensiblement similaire à celle du modèle de la figure 2, à une exception près qui consiste à assembler le raccord 54 et l'insert 24 par sertissage en atelier.

Les figures 2' à 4' correspondent aux trois modèles 12-14 des figures 2 à 4 complétés par des organes d'étanchéité 61 prévus entre l'insert 22-24 et la paroi intérieure du tuyau 1 permettant d'améliorer l'étanchéité du raccordement en cas de besoin. Ces organes d'étanchéité sont par exemple constitués de joints toriques 61 logés dans des rainures 62 ménagées dans le tronçon d'extrémité cylindrique 31 de l'insert 22-24. Ils sont au nombre de deux disposés l'un derrière l'autre, le premier joint 61 étant destiné à être en contact avec le fluide qui circule dans le tuyau 1 et à jouer sa fonction d'étanchéité, le second joint 61 étant prévu en sécurité dans l'hypothèse où le premier serait abîmé par un fluide agressif.

Il ressort clairement de cette description que l'invention permet d'atteindre les buts fixés et notamment de permettre le raccordement de tuyaux flexibles en matériau déformable et sans armature métallique à une installation de plomberie de manière très simple, rapide, sans outil spécial et sans investissement particulier. De plus, les quatre modèles proposés permettent de répondre à tous les besoins en terme de type de raccords nécessaires dans une installation de plomberie : raccords mâles ou femelles, fixes ou tournants, avec ou sans organes d'étanchéité 61 complémentaires. Ils permettent en plus le raccordement de tuyaux entre eux par exemple en utilisant deux dispositifs de raccordement complémentaires tels qu'un raccord femelle fixe (fig. 1) avec un raccord mâle tournant (fig. 4) ou un raccord mâle fixe (fig. 3) avec un raccord femelle tournant (fig. 2). On peut également envisager de créer un insert double, c'est à dire comportant deux zones de raccordement opposées, pourvues chacune d'un filetage à pas inversé et séparées d'une zone de préhension permettant le vissage de cet insert simultanément ou non dans deux tuyaux à raccorder. On peut aussi envisager d'utiliser un dispositif de raccordement similaire à ceux des figures 2 et 4 dans lesquels le raccord tournant comporterait un deuxième insert à la place des tronçons filetés femelle ou mâle.

Les zones de préhension 36, 45 et 55 illustrées dans ces exemples comportent des méplats mais pourraient comporter d'autres formes adaptées à des outils standard comme des empreintes, des crans, des moletages, etc.

L'ensemble des pièces entrant dans ces dispositifs de raccordement est de préférence réalisé en métal, comme par exemple en laiton et obtenu par un procédé de décolletage.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif de raccordement (11-14) pour tuyaux (1) en matériaux déformables utilisés par exemple dans une installation sanitaire et comportant au moins un insert (21-24) destiné à être introduit dans l'extrémité d'un tuyau (1), une douille (41) destinée à être enfilée sur ladite extrémité et coopérer avec ledit insert (21-24) pour le verrouiller audit tuyau (1) et un raccord (51-54) couplé audit insert (21-24) et destiné à se raccorder à un élément fixe de ladite installation ou à un autre tuyau, **caractérisé en ce que** l'une des pièces, dudit insert (21-24) ou de ladite douille (41), comporte au moins un filetage (35) formé d'un filet demi rond à large pas apte à se visser dans ou sur l'extrémité du tuyau (1) à raccorder, l'autre pièce, de ladite douille (41) ou dudit insert (21-24), comporte au moins une zone de friction (47) apte à être en contact avec ledit tuyau (1), au moins ledit insert (21-24) ou ladite douille (41) comporte une section variable apte à déformer radialement l'extrémité dudit tuyau (1) pour autoriser son verrouillage par écrasement radial entre ledit insert (21-24) et ladite douille (41), et, **en ce qu'**au moins ledit insert (21-24), ladite douille (41) et/ou ledit raccord (51-54) comportent une zone de préhension (36, 45, 55) pourvue de formes aptes à coopérer avec un outil de serrage traditionnel.

2. Dispositif de raccordement selon la revendication 1, **caractérisé en ce que** ladite section variable est constituée d'au moins un tronçon conique (32) prévu au moins sur ledit insert (21-24) ou ladite douille (41).

3. Dispositif de raccordement selon la revendication 1, **caractérisé en ce que** ledit filetage (35) a un pas compris entre 1 et 4 mm.

4. Dispositif de raccordement selon la revendication 1, **caractérisé en ce que** ledit insert (21-24) comporte ledit filetage (35) et ladite douille (41) comporte ladite zone de friction (47) sur au moins une partie de son alésage intérieur (46) destiné à être en contact avec ledit tuyau (1).

5. Dispositif de raccordement selon la revendication 1, **caractérisé en ce que** ladite douille comporte ledit filetage et ledit insert comporte ladite zone de friction sur au moins une partie de sa zone de raccordement destinée à être en contact avec ledit tuyau.

6. Dispositif de raccordement selon l'une des revendications 4 ou 5, **caractérisé en ce que** ladite zone de friction (47) est formée par un état de surface rugueux, un crantage, un moletage, un rainurage, un filetage.

7. Dispositif de raccordement selon la revendication 1, **caractérisé en ce que** ledit insert (21) et ledit raccord (51, 53) sont constitués d'une seule pièce.

8. Dispositif de raccordement selon la revendication 1, **caractérisé en ce que** ledit insert (22, 24) et ledit raccord (52, 54) sont constitués de deux pièces assemblées pour être mobiles en rotation l'une par rapport à l'autre autour de leur axe (A).

9. Dispositif de raccordement selon la revendication 8, **caractérisé en ce que** ledit insert (22, 24) comporte, en prolongement de sa zone de raccordement (30) avec ledit tuyau (1), une zone de préhension (36) et une tête de liaison (37), ladite zone de préhension (36) étant pourvue de formes (38) aptes à coopérer avec un outil de serrage traditionnel et la tête de liaison (37) comportant des formes d'assemblage complémentaires (39) à celles prévues dans ledit raccord (52, 54).

10. Dispositif de raccordement selon la revendication 8, **caractérisé en ce qu'**il comporte au moins un organe d'étanchéité (60) disposé entre ledit insert (22, 24) et ledit raccord (52, 54).

11. Dispositif de raccordement selon la revendication 2, **caractérisé en ce que** ledit insert (21-24) comporte avant son tronçon conique (32) au moins un tronçon d'extrémité cylindrique (31) d'un diamètre sensiblement égal au diamètre intérieur dudit tuyau (1) et correspondant au plus petit diamètre du tronçon conique (32).

12. Dispositif de raccordement selon la revendication 2, **caractérisé en ce que** ledit insert (21-24) comporte après son tronçon conique (32) au moins un tronçon cylindrique (33) d'un diamètre correspondant au plus grand diamètre dudit tronçon conique (32).

13. Dispositif de raccordement selon la revendication 12, **caractérisé en ce que** ledit insert (21-24) comporte après son tronçon cylindrique (33) un dégagement (34) apte à recevoir le bord dudit tuyau (1) rétracté.

14. Dispositif de raccordement selon la revendication 1, **caractérisé en ce que** lesdites zones de préhension (36, 45, 55) comportent des méplats (38).

15. Dispositif de raccordement selon la revendication 11, **caractérisé en ce qu'**il comporte au moins un organe d'étanchéité (61) prévu sur le tronçon d'extrémité cylindrique (31) dudit insert (22-24).
